(19) 

Europäisches
Patentamt
European
Patent Office
Office européen
des brevets

(11) **EP 2 768 204 A1**

(12) **EUROPEAN PATENT APPLICATION**

(43) Date of publication:
   **20.08.2014 Bulletin 2014/34**

(51) Int Cl.:
   **H04L 29/08** (2006.01)     **H04L 29/06** (2006.01)

(21) Application number: **14000405.2**

(22) Date of filing: **04.02.2014**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **15.02.2013 US 201313768785**

(71) Applicant: **Telefonaktiebolaget L M Ericsson
   (publ)
   164 83 Stockholm (SE)**

(72) Inventors:
   • **Zhu, Zhongwhen
     Saint-Laurent, H4R 3H7 (CA)**
   • **Pagé, Francis
     Quebec, H7X 1L7 (CA)**

(74) Representative: **Röthinger, Rainer
   Wuesthoff & Wuesthoff
   Patent- und Rechtsanwälte
   Schweigerstrasse 2
   81541 München (DE)**

(54) **Method and multimedia content manager for managing multimedia content download**

(57)   The invention relates to a method, Multimedia Content Manager (MuMCM), gateway and user device for managing multimedia content download. The MuM-CM is in communication with a user device and with an operator network through a subscription. The MuMCM can be implemented in hardware as a standalone device or as a software service, running in a gateway or user device. The method includes sending a request for data usage for the subscription to the operator network and receiving a response comprising the data usage. The method includes receiving a request for multimedia content, sending a modified request for the multimedia content to a content provider, the request being modified according to a maximum content size available for download and receiving a multimedia content. The method includes transmitting the multimedia content to the user device and storing the multimedia content in a cache.

FIG. 1

EP 2 768 204 A1

## Description

### TECHNICAL FIELD

The present invention relates to a Method and a Multimedia Content Manager for managing multimedia content download.

### BACKGROUND

The rapid evolution of smart portable devices, e.g. notebooks, ultrabooks, tablets, smartphones, network enabled media players, cameras, portable as well as wired gaming consoles and the adoption of Internet Protocol (IP) based television, etc., along with increasing wireless transmission speeds is driving users to consume more and more data and multimedia contents. Wireless, as well as wired devices connect through the internet to services such as video sharing websites, on-demand multimedia streaming websites or other such services and download and transmit a significant and always increasing amount of data from and to the network.

Cable, wireless or broadband operators offer monthly based packages to subscriber or household for downloading and uploading data through their networks. These packages usually include a certain amount of data, sometimes referred to as a quota, which can be downloaded and uploaded through the operator's network. Wireless network operators offer fixed or progressive data plans where the user pays more if he/she uses more. As a general case, surcharge is generally applied when the quota is exceeded, since unlimited data plans or monthly plan are not widely available.

At the end of a month, users typically do not download the exact amount of data corresponding to the quota available with their data plan: cabled or wireless. Even with progressive plans, quota utilization is not optimal. It is now also more and more frequent to see users having several subscriptions with different operators, e.g. one subscription with a cable operator at home and at least one subscription with a wireless operator for their smartphone or tablet. These subscriptions may be for different quotas and the total quota available to a user is very likely to be non-optimally used.

While the quota is generally fixed, on the other hand, from the perspective of a content provider, when content is ordered, the content is nonetheless delivered to the user's device to fulfill the sale contract without any knowledge of the state of data consumption of the user. Therefore, a user might pay a penalty if the data downloaded on one of the devices on the subscribed operator's package exceeds the given quota.

### SUMMARY

It is therefore an object to provide a system and method that obviate or mitigate at least some of the above described disadvantages.

There is provided a method for managing multimedia content download, executed in a Multimedia Content Manager in communication with at least one user device and at least one operator network through at least one subscription. The method comprises the step of sending a request for data usage for a selected subscription, to a corresponding operator network and receiving a response comprising the data usage for the selected subscription from the corresponding operator network. The method comprises receiving a request for a multimedia content from a user device. The method further comprises the step of sending a modified request for the multimedia content to a content provider, through the selected subscription, the modified request being modified according to a maximum content size calculated according to the received data usage for the selected subscription and receiving the multimedia content from the content provider, through the selected subscription. The method further comprises transmitting the multimedia content to the user device.

The modified request can contain the maximum content size to allow the content provider to provide the multimedia content in a size which is less or equal to the maximum content size. The modified request can request for an alternative multimedia content of a reduced size, less or equal to the maximum content size.

The method can further comprise the steps of sending a second request for data usage, for a second subscription, to a second corresponding operator network, receiving a second response comprising the data usage for the second user subscription from the second corresponding operator network and selecting one of the subscriptions for use for sending the request for multimedia content and for receiving the multimedia content.

The second operator network may be a wireless operator network.

A subscription to a broadband operator network may be preferred over a subscription to a wireless operator network.

The method can further comprise the steps of sending a plurality of requests for data usage, for a plurality of additional subscriptions, to corresponding operator network. The method can further comprise receiving a plurality of responses comprising the data usages for the plurality of additional user subscriptions from the corresponding operator networks and selecting at least one of the subscriptions for use for sending the request for multimedia content and for receiving the multimedia content.

In the method the selecting step can comprise selecting at least two subscriptions. Sending a request for multimedia content can comprise splitting the request for multimedia content in at least two requests and sending the at least two requests for multimedia content to the content providers through a plurality of user subscription, to increase the download speed. The step of receiving the multimedia content can comprise merging the multimedia content received in response to the at least two requests.

In the method the selecting step can comprise selecting the subscription having a smallest ratio data usage / monthly quota.

In the method the selecting step can comprise selecting the subscription having a smallest ratio multimedia content size / monthly quota still available.

The method can further comprise the step of storing the multimedia content in a cache of the Multimedia Content Manager.

There is also provided a Multimedia Content Manager, for managing multimedia content download, in communication with at least one user device and at least one operator network through at least one subscription. The Multimedia Content Manager comprises an I/O interface module and a processing module for executing the steps of the method described above and for calculating the maximum content size and for modifying the request for multimedia content.

The Multimedia Content Manager can comprise a cache for storing the multimedia content.

The Multimedia Content Manager can be a standalone device connected to home gateway in the user domain.

The Multimedia Content Manager can be a service running in a home gateway.

The Multimedia Content Manager can be a standalone portable device.

The Multimedia Content Manager can be a service running in a user device.

## BRIEF DESCRIPTION OF THE DRAWINGS

Fig. 1      is a schematic illustration of a communications network illustrating a Multimedia Content Manager according to an embodiment.

Fig.2      is a schematic illustration of an architecture of a communications net-work according to an embodiment.

Figs. 3a-d      are alternate schematic illustrations of architectures of a communications network according to some embodiments.

Figs. 4a-c      are schematic drawings of a Multimedia Content Manager according to some embodiments.

Fig. 5      is a flowchart illustrating steps of a method according to an embodiment.

Fig. 6      is a flowchart illustrating optional steps of the method of figure 5.

Figs 7-9      illustrate traffic flows for the Multimedia Content Manager according to some embodiments.

## DETAILED DESCRIPTION

The various features will now be described with reference to the figures. These various aspects are described hereafter in greater detail in connection with exemplary embodiments and examples to facilitate an understanding of the invention, but should not be construed as limited to these embodiments. Rather, these embodiments are provided so that the disclosure will be thorough and complete, and will fully convey the scope of the invention to those skilled in the art. In the drawings, dotted lines generally indicate optional steps or components and same numbers generally designate like devices.

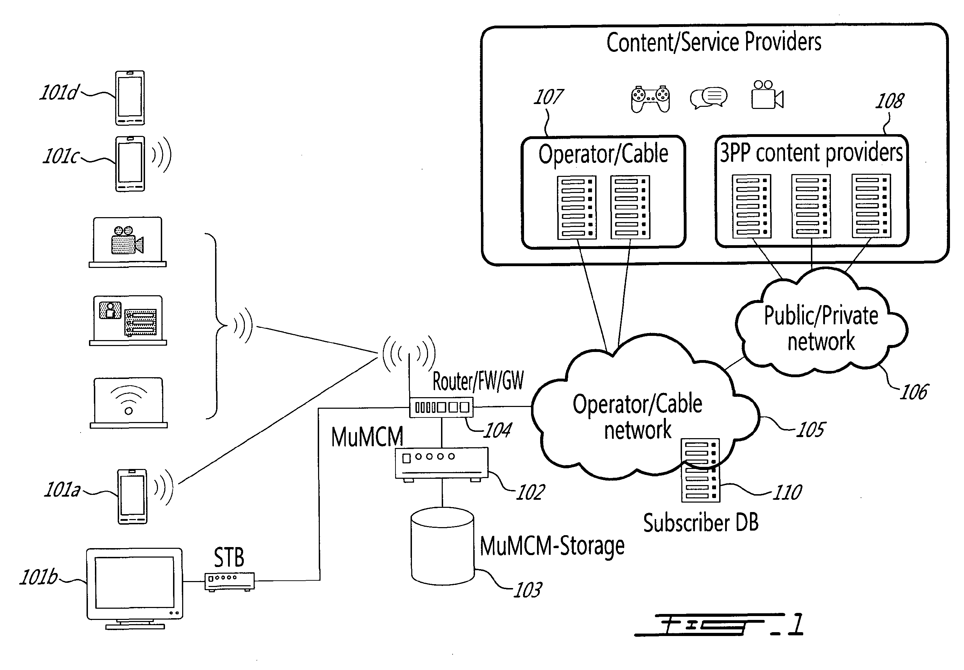

Referring now to the drawings, figure 1 illustrates an embodiment of a Multimedia Content Manager (MuMCM) 102, for managing multimedia content download, in communication with at least one user device and at least one operator network 105 through at least one subscription. The Multimedia Content Manager 102 is preferably deployed in hardware but can also be deployed in software in the user domain, as will be illustrated in other figures. The Multimedia Content Manager 102 sends a request for data usage, for a selected subscription, to a corresponding operator network 105 and receives a response comprising the data usage for the selected user subscription from the corresponding operator network 105. These two steps can be executed once every given amount of time and then the MuMCM 102 can keep track of the quota locally, or the steps can be executed each time there is a request from a user. These steps can also be executed out of sequence, for example after a request for multimedia content is received.

The Multimedia Content Manager 102 comprises an I/O module and receives requests, from user devices 101a, 101b, 101c and 101d, generally 101, for multimedia content from content providers 107, 108. It manages downloads of multimedia contents from content providers 107, 108 via the operator network 105 according to the subscription. The Multimedia Content Manager 102 then modifies the request for the multimedia content using the processing module for calculating the maximum content size. The Multimedia Content Manager 102 sends the modified request for multimedia content to a content provider 107, 108, through the selected subscription. The modified request can comprises a maximum content size calculated according to the received data usage for the selected subscription. The modified request can alternatively request for an alternative multimedia content of a reduced size. The available quota remaining is normally stored in a subscriber's database 110 of the operator network 105, but it is envisioned that it can be stored elsewhere or calculated in a different manner. For example, an unused quota can be calculated by the MuMCM 102 if the operator network provides a current data usage for a given time period, such as a month, and a total quota available per month. Once a user has reached or is close to the limit, the Multimedia Content Manager 102 can block or adapt the requests to multimedia content to prevent exceeding the quota. If the quota needs to be exceeded, the MuMCM 102 can manage by how much the quota is exceeded according to user settings and/or parameters. The Multimedia Content Manager 102 receives a multimedia content, from the content provider, through the selected subscription and transmits the multimedia content to the user device 101.

In addition, the Multimedia Content Manager 102 preferably implements a cache 103 to store the multimedia contents downloaded from the content providers 230. When a user requests the same content using a second device 101, the Multimedia Content Manager 102 can deliver the content from its cache 103 instead of downloading it from the content provider again, therefore avoiding most of the previously described steps. The cache 103 can take any form of volatile or non-volatile memory, such as a hard drive, a flash memory, an optical disk or any other semiconductor based memory, for example. It can be located within the Multimedia Content Manager or in any other location such as an external hard drive or a network drive.

Still referring to figure 1, in an embodiment, the Multimedia Content Manager 102 is deployed behind the home gateway 104 or firewall. The requests from user devices 101 are sent to the Multimedia Content Manager 102 through the gateway 104. If the requested content is present in the cache 103, the Multimedia Content Manager 102 delivers the content to the device 101 right away; otherwise, the Multimedia Content Manager 102 modifies the request and forwards it, through the gateway 104, to the content provider 230 via the operator's network 105.

An example where a Multimedia Content Manager 102 is of great use is where one device in use is a Set Top Box (STB) 101b, which can consume a lot of multimedia content either from a content provider 107 of the operator or cable network or from third party content providers 108 distributing content through internet or through other networks, public or private 106. A maximum content size for a request for multimedia content is calculated from the data usage received from the network operator. In one embodiment, the maximum content size is inserted into a request to the content provider in order for the content provider to be able to adjust the multimedia contents to be delivered to the subscriber. The transcoding mechanism might be used for the content adjustment. In another embodiment, the MuMCM can first retrieve the manifest file associated to the multimedia content from the content provider. From that file, if multiple file size options are present, the MuMCM can select the file with a right size, which doesn't exceed the quota.

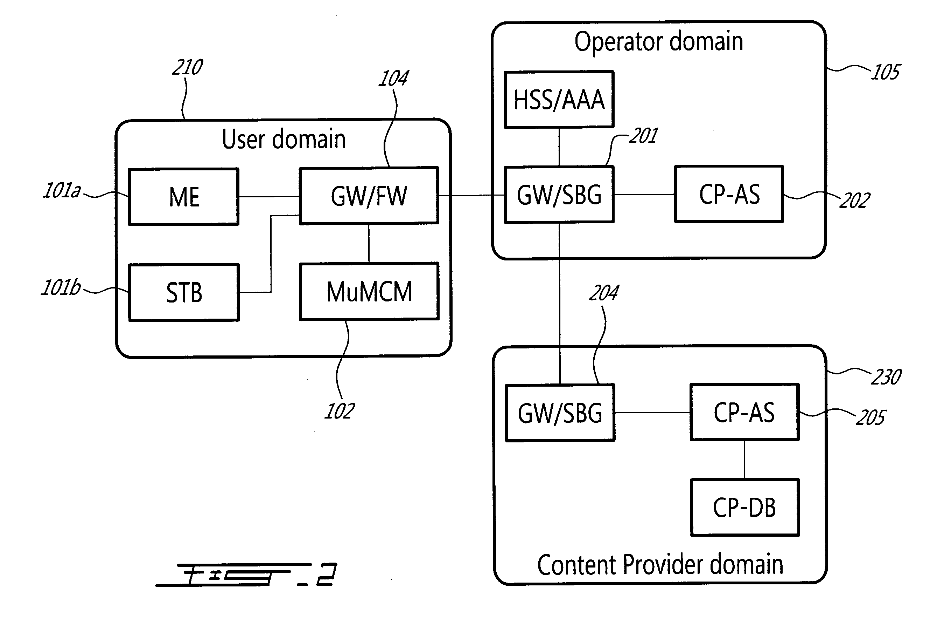

Referring now to Figure 2, according to an embodiment, the Multimedia Content Manager 102 is connected to a home gateway/firewall 104 in the user domain 210. The Multimedia Content Manager 102 is able to communicate, through the gateway 104, with the Content Provider Application Server (CP-AS) 202, 205 located in the operator domain 105 or in the content provider domain 230, through corresponding gateways 201, 204. In the latter case, the operator network is used as a pipe to let the content provider reach its subscribers.

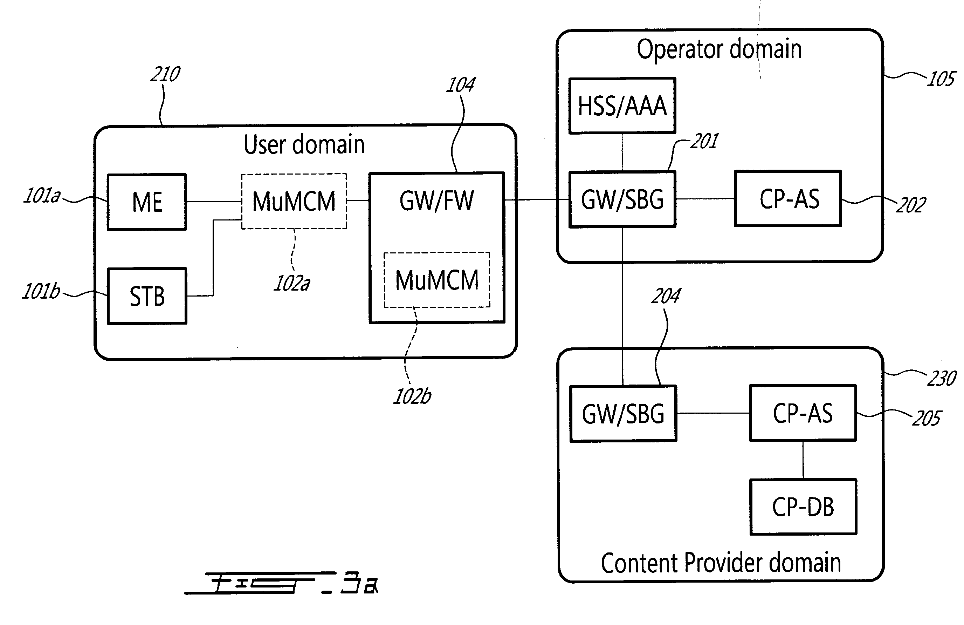

Turning now to figures 3a-d, the Multimedia Content Manager can be deployed in different manners in the user domain 201. As shown in figures 3a, the Multimedia Content Manager 102 can be deployed, for example, as a software service running on a gateway 104, MuMCM 102b. When the MuMCM service is running in a home gateway 104, the service can be pushed to the gateway 104 from the operator domain 220. This push can be done, for example, following an alarm in the operator domain 220. The service can also be pushed according to user preferences, such as after the operator detects that the user has downloaded data over his quota for a first time or after a certain number of consecutive months, for example. Or the service can be pushed if the user is close to his quota.

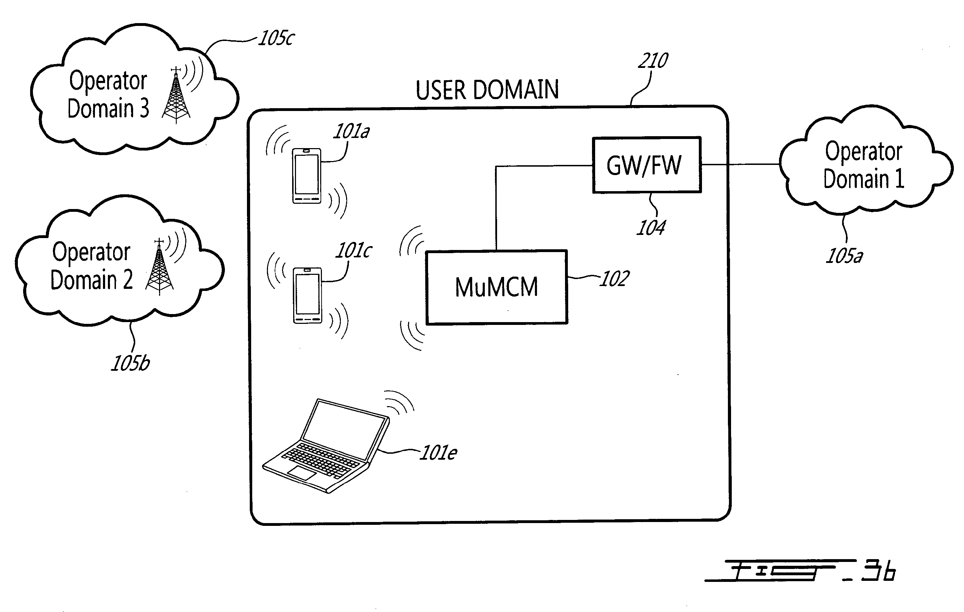

The Multimedia Content Manager 102 can alternatively be deployed as a standalone device located between the gateway 104 and the user devices 101a, 101c and 101e in the user domain, such as illustrated in figure 3b, also illustrated as MuMCM 102a in figure 3a. The configuration or architecture illustrated in figure 3b allows the MuMCM 102 to have access to a plurality of user subscriptions through a plurality of additional operator networks, for example, through user devices 101a and 101c which have a subscription with operator networks 105c and 105b. In this case, devices 101a and 101c can play both roles of consumer and provider. Several advantages can be derived from this configuration, among which increased total monthly bandwidth available, increased download speed if a plurality of subscriptions are used in parallel to download content, fallbacks in case one device's connection to its corresponding operator network fails and optimization of overall quota usage.

When a wireless user device 101, connects with the MuMCM 102 for the first time, settings or parameters for use with the corresponding subscription can be set in the MuMCM 102 and corresponding parameters can be read and/or set in the user device 101 for specifying how each connection to an operator domain may be used and what quantity of data can be downloaded, how, by whom and when. This will be discussed in more details farther.

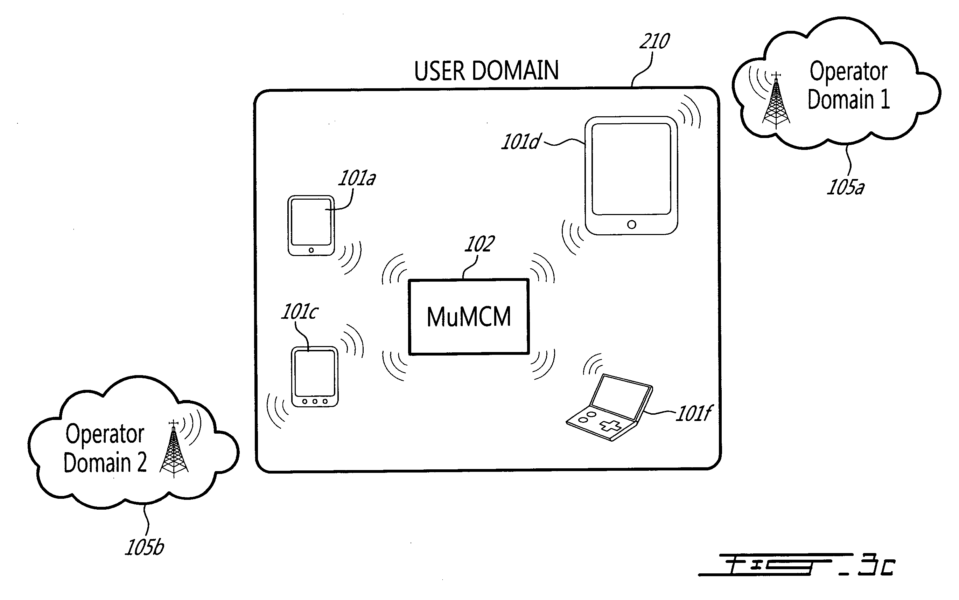

The Multimedia Content Manager 102 can also be a standalone device connected wirelessly to a plurality of wireless user devices 101a, 101c, 101d, 101f, such as illustrated in figure 3c. This configuration provides the advantages of the previous configuration and provides the additional advantage that the MuMCM 102 is now portable.

For example, such a portable MuMCM 102 can be used at the beach, in camping or in other kind of reunions, to share download bandwidth between users having a wireless subscription with an operator network via, for example, a Radio Base Station (RBS) using Global System for Mobile Communications (GSM)/Third Generation (3G)/Long Term Evolution (LTE) and other users having Wireless Fidelity (WiFi), Bluetooth or other short distance wireless protocol connections. Most popular downloads can be downloaded only once and are stored in the cache 103 of the MuMCM for future use. Already downloaded content can then be read directly from the MuMCM upon subsequent requests, thus optimizing data downloads. Furthermore, it is envisioned that a system for exchanging credits or money can be implemented in the MuMCM thus rewarding users sharing their download quotas and allowing users without a subscription to download content for a predefined price.

With such a system, users register with the MuMCM and, according to their profiles, can share with or take advantage of a collective download bandwidth. In such an embodiment, each user can play two roles, consumer and provider. A user profile can contain, for example, data related to subscription with a network operator, sharing parameters, price asked for Megabits of download per category of users (close family can be charged nothing while other people can be charged varied prices). The profile can also comprise further parameters regarding quantity of downloads allowed. The corresponding profiles are preferably set in the MuMCM, but can be set in a web application running in the network or in the cloud. The profiles can also be stored in cloud.

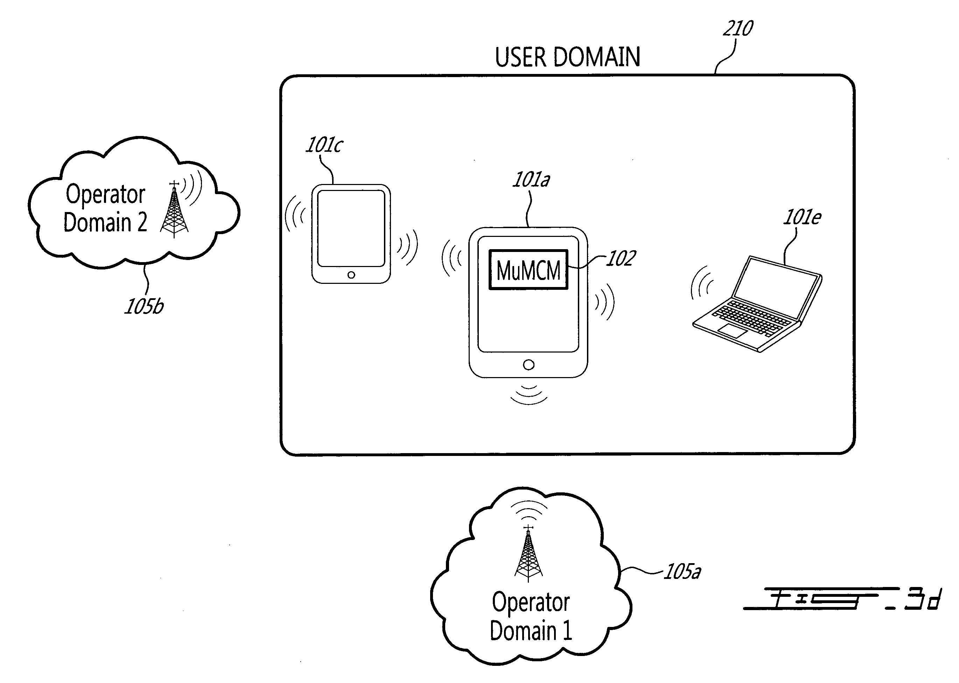

In yet another embodiment, such as illustrated in figure 3d, the Multimedia Content Manager 102 can also run as a service in a user device 101a, connected wirelessly to other user devices 101c, 101e. This configuration provides most of the advantages described previously. In this case, the device 101a preferably has a large storage capacity and is able to support a plurality of wireless connections simultaneously. It should be noted that while the figures show a limited number of user devices connected to the MuMCM 102, there is no actual limit on the number of users.

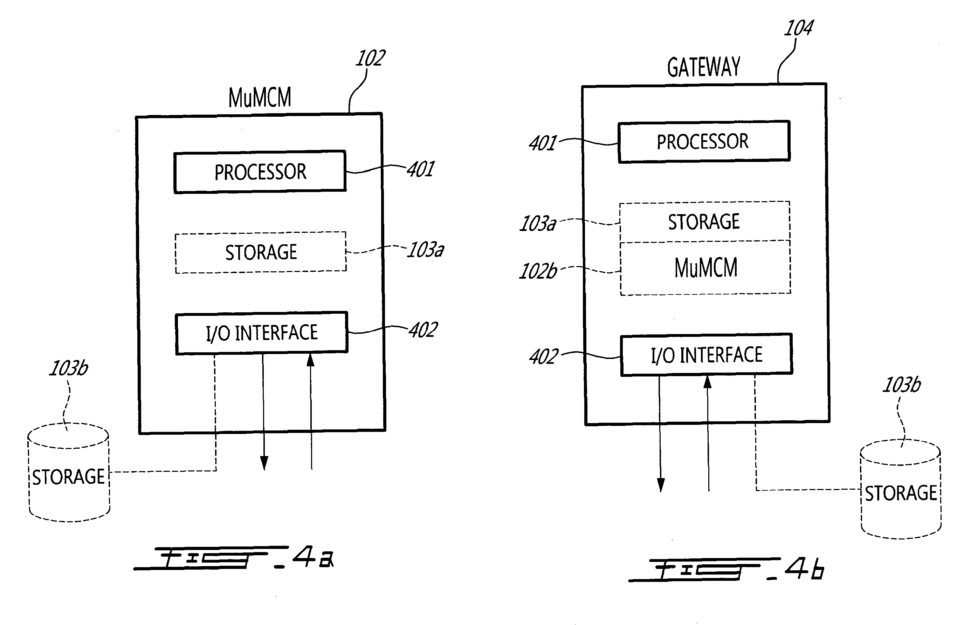

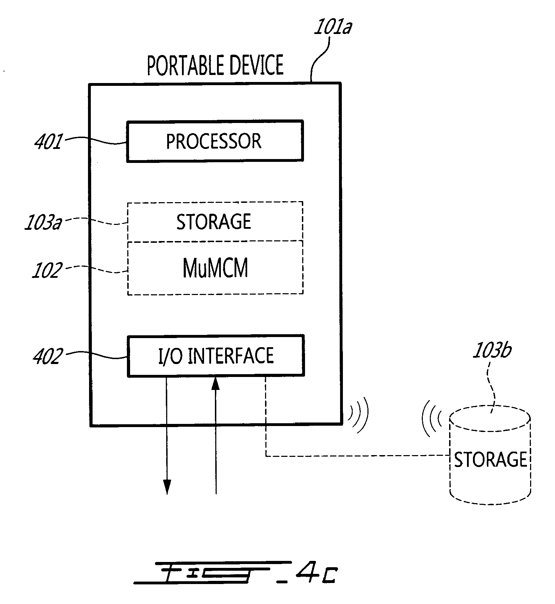

Referring now to figure 4a-c, the Multimedia Content Manager 102 can be implemented as a standalone device, figure 4a, in a gateway 104, figure 4b, or in a portable device, figure 4c. When the MuMCM 102 is implemented in a gateway 104, it is preferably as a service. In each of these cases, the standalone MuMCM 102, the gateway 104 or the portable device 101a include an I/O interface 402 and a processor 401 for receiving, sending and transmitting requests, responses and multimedia content as described before. Each embodiment of figure 4a-c also includes storage, which can be either an internal storage 103a or an external storage 103b.

The I/O interface 402 is for communicating with other nodes in the network. The I/O interface 402, or communications interface, generally includes analog and/or digital components for sending and receiving communications to and from other devices, such as the mobile device 101, and may also include capabilities for wired communication with one or more networks. Those skilled in the art will appreciate that the block diagram of the MuMCM 102 necessarily omits numerous features that are not necessary for a complete understanding of this disclosure.

Although all of the details of the MuMCM 102 are not illustrated, MuMCM 102 may comprise one or several general-purpose or special-purpose processors 401 or other microcontrollers programmed with suitable software programming instructions and/or firmware to carry out some or all of the functionality of the MuMCM 102 described herein. In addition, or alternatively, the MuMCM 102 may comprise various digital hardware blocks (e.g., one or more Application Specific Integrated Circuits (ASICs), one or more off-the-shelf digital or analog hardware components, or a combination thereof) (not illustrated) configured to carry out some or all of the functionality of the MuMCM 102 described herein. A memory, such as a random access memory (RAM), may be used by the processor 401 to store data and programming instructions which, when executed by the processor 401, implement all or part of the functionality described herein. The MuMCM 102 may also include one or more storage media (not illustrated) for storing data necessary and/or suitable for implementing the functionality described herein, as well as for storing the programming instructions which, when executed on the processor 401, implement all or part of the functionality described herein. One embodiment of the present disclosure may be implemented as a computer program product that is stored on a computer-readable storage medium, the computer program product including programming instructions that are configured to cause the processor 401 to carry out the steps described herein.

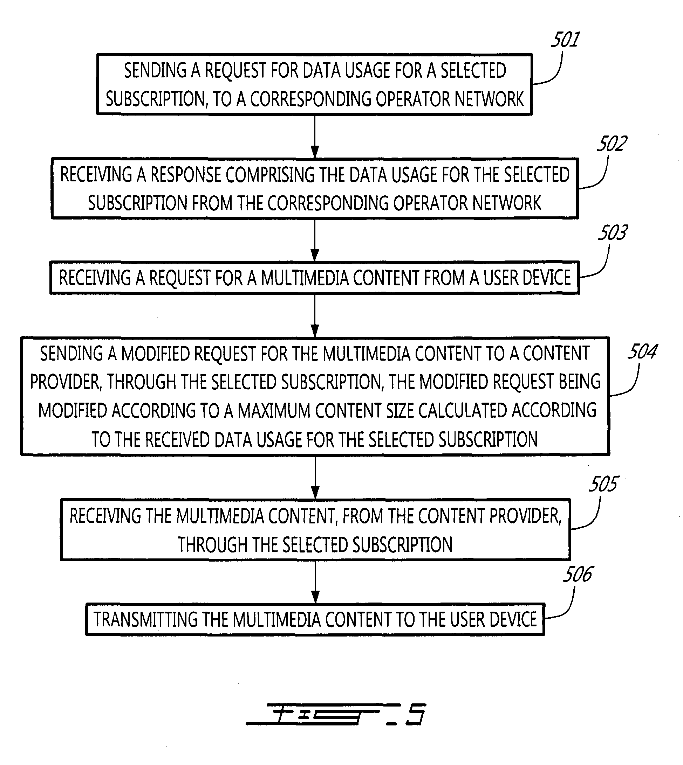

Figure 5 illustrates the steps of a method for managing multimedia content download, executed in a Multimedia Content Manager in communication with at least one user device and at least one operator network through at least one subscription. The Multimedia Content Manager sends a request for a data usage for the selected subscription, to the corresponding operator network, step 501. The Multimedia Content Manager receives a response from the operator network comprising the data usage for the selected subscription, step 502. The Multimedia Content Manager receives a request for a multimedia content from a user device, step 503. The Multimedia Content Manager sends a modified request for the multimedia content to a content provider, through the selected subscription, the modified request being modified according to a maximum content size calculated according to a received data usage for the selected subscription, step 504. The Multimedia Content Manager receives a multimedia content, from the content provider, through the selected subscription, step 505. The Multimedia Content Manager transmits the multimedia content to the user device, step 506.

The modified request may contain the maximum content size to allow the content provider to provide the multimedia content in a size that is less or equal to the maximum content size. This can be done by providing a multimedia content with a lower resolution, a more aggressive compression, a lower data rate, etc. The modified request can also be directly for an alternative multimedia content of a reduced size.

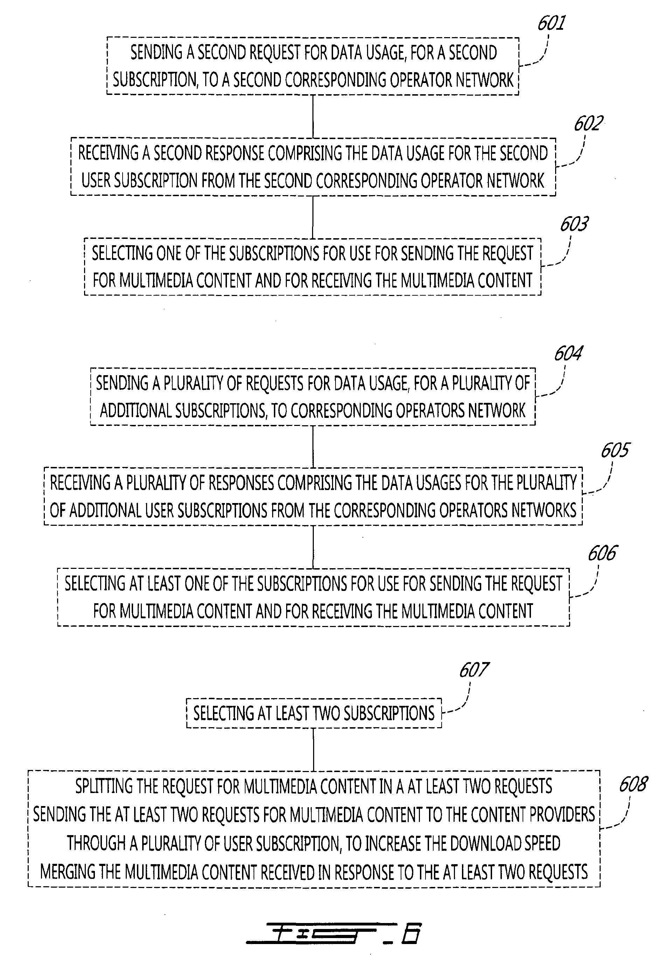

Figure 6 illustrates that the Multimedia Content Manager may further send a second request for data usage, for a second subscription, to a second corresponding operator network, step 601. The Multimedia Content Manager may then receive a second response comprising the data usage for the second user subscription from the second corresponding operator network, step 602. The Multimedia Content Manager may then select one of the subscriptions for use for sending the request for multimedia content and for receiving the multimedia content, step 603. The second operator network may be a wireless operator. The subscription to a broadband operator network may be preferred over a subscription to a wireless operator network based upon a policy that can be specified by a user.

The Multimedia Content Manager may also send a plurality of requests for data usage, for a plurality of additional subscriptions, to corresponding operator network, step 604. The Multimedia Content Manager can also receive a plurality of responses comprising the data usages for the plurality of additional user subscriptions from the corresponding operator networks, step 605. The Multimedia Content Manager can also select at least one of the subscriptions for use for sending the request for multimedia content and for receiving the multimedia content, step 606.

The selecting step can comprise selecting at least two subscriptions, step 607. The step of sending a request for multimedia content can comprise, as illustrated as step 608, splitting the request for multimedia content in a at least two requests, sending the at least two requests for multimedia content to the content providers through a plurality of user subscription, to increase the download speed and merging the multimedia content received in response to the at least two requests.

The selecting step can comprise selecting the subscription having a smallest ratio data usage / monthly quota, or selecting the subscription having a smallest ratio multimedia content size / monthly quota still available.

The Multimedia Content Manager may further store the multimedia content in a cache.

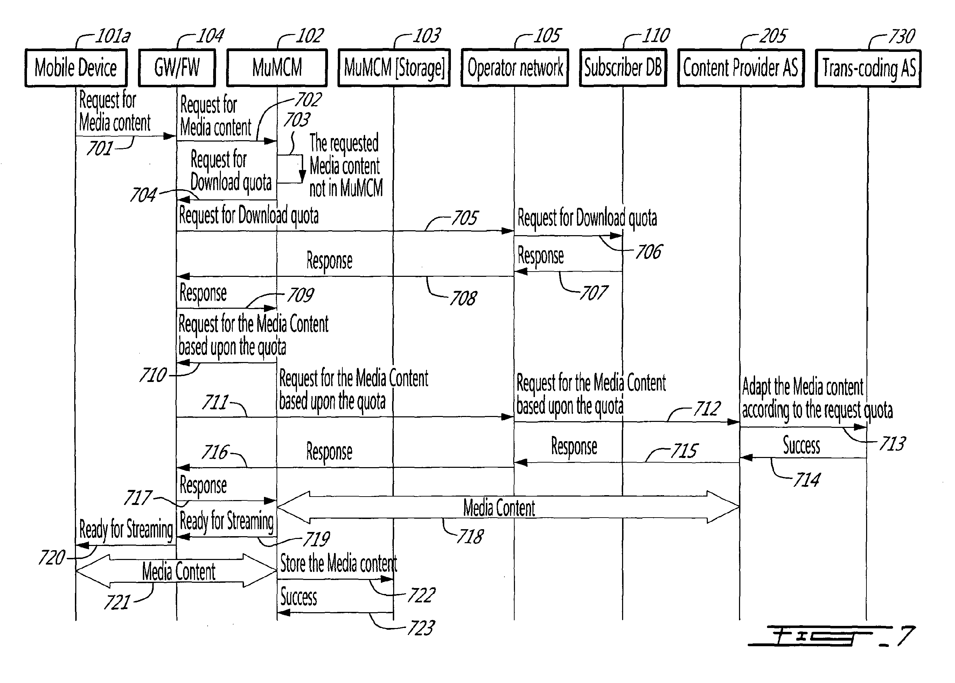

A first use case is given hereafter to demonstrate how a proposed embodiment of the solution works in reference to Figure 7. User A is a subscriber of an operator network 105 with a monthly data plan. User A also subscribes to the content provider with a monthly plan. Figure 7 illustrates a scenario where user A requests a multimedia content from the content provider.

The request from a mobile device 101a of user A is forwarded by the Gateway (GW)/Firewall (FW) 104 to the Multimedia Content Manager 102, steps 701 and 702. The Multimedia Content Manager 102 verifies if the requested multimedia content exists in local cache 103 or not, step 703.

Since the requested multimedia content doesn't exist in the local cache 103, the Multimedia Content Manager 102 sends the request to the operator network 105, to retrieve the remaining data quota according to the monthly plan of user A. The Multimedia Content Manager 102 receives the response from the network operator application server, steps 704 to 709.

The Multimedia Content Manager 102 sends the request for downloading the multimedia content to the content provider 205. The request includes the quota, or maximum content size, for the multimedia contents to be downloaded, step 710 to 712. Based upon the quota or maximum content size retrieved from the request, the content provider 205 adapts the requested content using a trans-coding Application Server 730. The success response is sent back to the Multimedia Content Manager 102, step 713 to 717.

Alternatively, the MuMCM can first retrieve the manifest file associated to the multimedia content from the content provider. From that file, if multiple file size options are present, the MuMCM can select the file with a right size, which doesn't exceed the quota and fetch it from the content provider.

The streaming session 718 between the content provider 205 and the Multimedia Content Manager 102 is established. The multimedia content is also streamed to the device 101a, step 719 to 721.

Eventually, or concurrently, the Multimedia Content Manager 102 stores the multimedia content in its local cache or storage 103, steps 722 and 723.

Some advantages related to this use case include allowing the end user to coordinate different service packages with different service providers, thus utilizing the network more efficiently. This solution not only benefits the end user but also the operator since the operator makes use of its network more efficiently and is able to attract subscribers by offering better network usage.

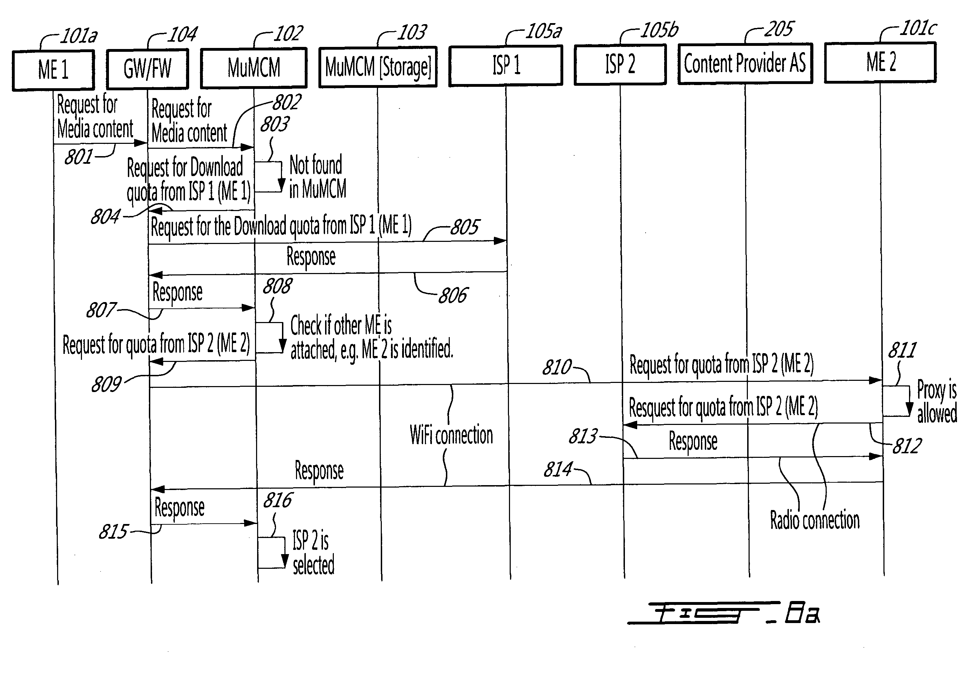

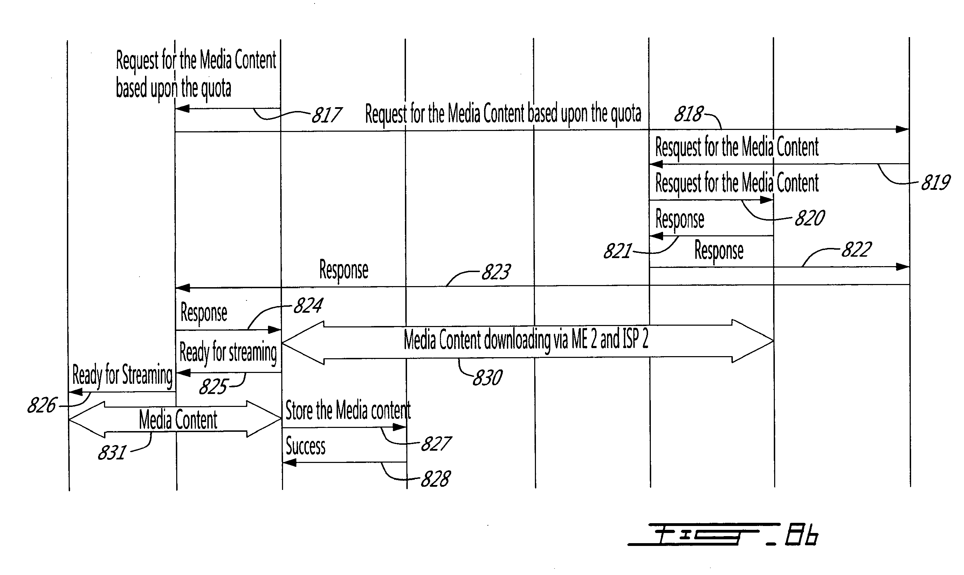

A second use case is given hereafter to demonstrate how a proposed embodiment of the solution works in reference to Figure 8. User A, having mobile device 101a is a subscriber of an operator network 105a with a monthly data plan. In this example, user A also subscribes to the content provider with a monthly plan. However it is not necessary that user A subscribe to a monthly plan from a content provider. User A can in fact request content from any content provider having an application server able to process requests containing a maximum content size or being able to provide a manifest file associated to the multimedia content to allow the MuMCM to select the multimedia content with a right size, which doesn't exceed the quota and fetch it from content provider.

Figure 8 illustrates a scenario where user A requests the multimedia content from a content provider, where a download quota for a first subscription to a service provider or network operator has been reached or exceeded.

User device 101a sends a request for multimedia content to gateway 104 at step 801. Gateway 104 forwards the request to the MuMCM 102, step 802, which checks if the multimedia content is stored in the cache 103. It should be noted that the MuMCM 102 can be located between the user device 101a and the gateway 104 and that the messages may be sent/received in a slightly different order. When it is determined that the multimedia content is not available from the cache 103, step 803, the MuMCM 102 sends a request for quota towards the gateway 104, step 804. The gateway redirects the request to the service provider or operator network 105a, step 805. The operator network sends a response towards the gateway 104 at step 806 with a remaining quota value of 0, for example, and the gateway 104 forwards this response to the MuMCM 102 at step 807.

The MuMCM 102 then checks if another device 101c having a subscription with another internet service provider 105b is available, step 808. It should be noted that both subscriptions to internet service providers 105a and105b can be two unrelated internet subscriptions with the same service provider. For example, the subscription of user A and the subscription of user B being both connected with the MuMCM 102 with given settings and parameters. At step 809, the MuMCM 102 request for the quota of the subscription for device 101c. This request is forwarded from the gateway 104 to user device 101c at step 810. Device 101c forwards the request to the corresponding service provider 105b, if allowed, steps 811, 812. It is envisioned that, in another embodiment, device 101c maintains the quota and data usage locally and provides it directly to the gateway 104/MuMCM 102. The service provider 105b returns a response to the device 101c at step 813. The response is then forwarded to the gateway 104 at step 814 and to the MuMCM 102 at step 815.

At step 816, the subscription of user B with service provider 105b is selected by the MuMCM 102. The request for multimedia content is sent to the content provider Application Server 205, steps 817-820. The response follows the reverse route at steps 821-824. Finally the multimedia content is streamed through the internet connection of the device 101c to the MuMCM 102 at step 830. A message ready for streaming is sent from the MuMCM to de device 101a at steps 825 and 826 and the content is streamed on the requesting device 101a. At steps 827, 828 the MuMCM 102 stores the multimedia content in its cache 103.

In this example, user B having device 101c can have specified to the MuMCM 102 that a fixed amount of data, e.g. 1Gb, can be downloaded with its subscription. In other examples, the amount of data that a user may be willing to provide from a cellular subscription can be calculated with one of the following formulae where A=data available for download, Q=monthly quota available, U=data used this month, D=day since beginning of billing period, P=average data used previous months.

$$A = Q / 30$$

$$A = (Q - U) / (30 - D)$$

$$A = Q\text{-}MAXIMUM(P,U)$$

Many other variations of these formulas can also be used or defined by users.

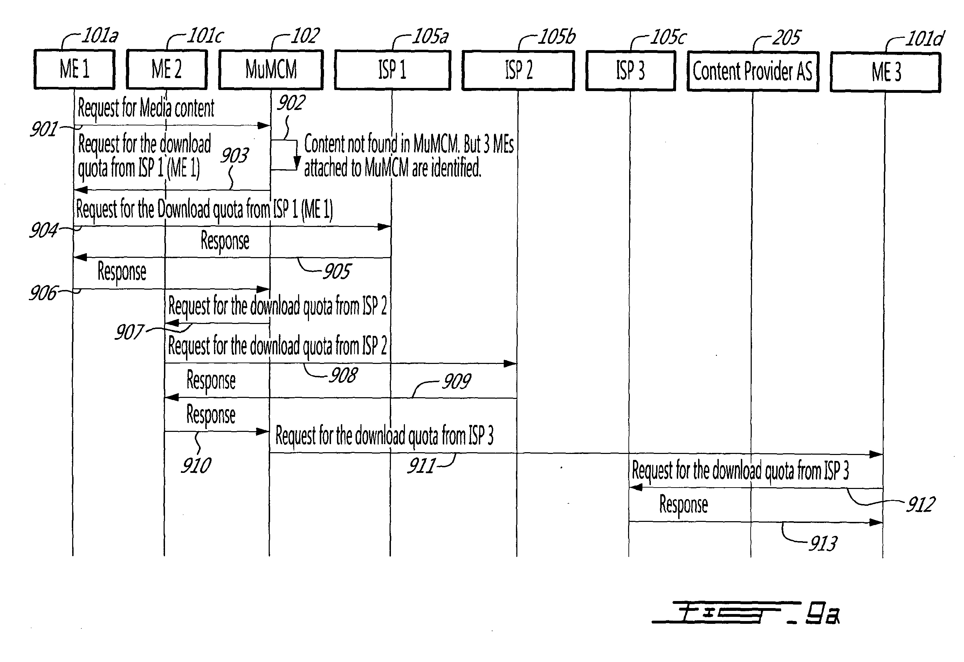

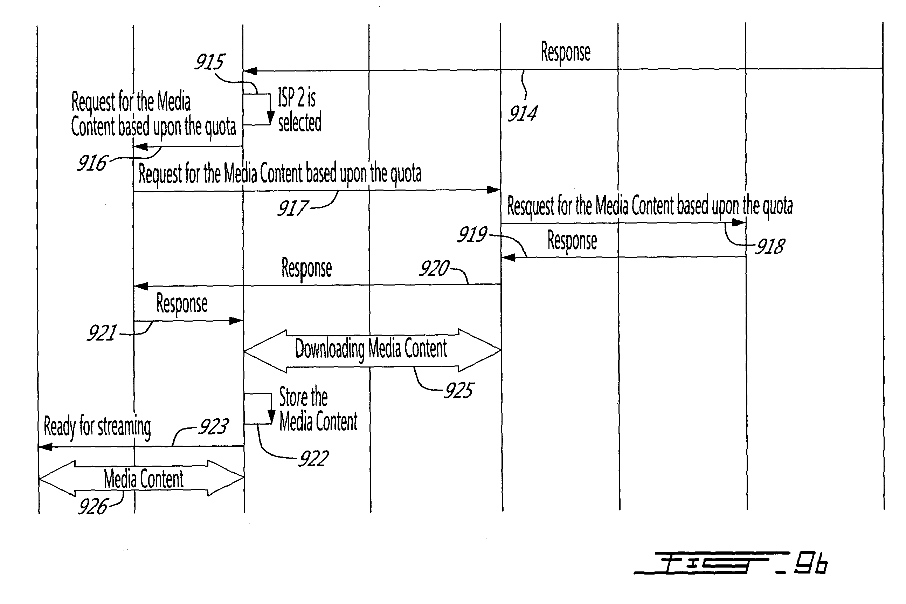

A third use case is given hereafter to demonstrate how a proposed embodiment of the solution works in reference to Figure 9. User A is a subscriber of an operator network 105 with a monthly data plan. User A requests a multimedia content from any content provider. Two other devices 101c and 101d, each having a subscription with an internet service provider are also connected to the MuMCM 102. In this example, the quota for device 101a of user A has been exceeded.

At step 901, user A sends a request for a multimedia content to the MuMCM 102. The content is not found in the local cache of the MuMCM, step 902. At steps 904-906 a request for quota used by device 101a is made and a response is received. When it is determined that the quota with the internet service provider 105a is exceeded, the MuMCM 102 queries other devices having a subscription with an internet service provider. The first query is made with device 101c at steps 907-910. The second query is made with device 101d at steps 911-914. At step 915, the subscription of user B with device 101c is selected. This selection may be based on user settings or parameters or based on negative/positive responses from the queries. It should be noted that more than one subscription can be selected and that the request for multimedia content can be spread through multiple subscription to either reduce the amount of data downloaded per subscription or to increase the download speed, for example. In such a case, the MuMCM receives the manifest for the multimedia content offered by the content provider. The manifest file might include one or more content files which form a large multimedia content. The MuMCM can decide to use different subscriptions to fetch different files and eventually stores them in the cache and deliver them to the device.

At steps 916-918, the request for multimedia content is sent towards the Content Provider AS 205 using the selected subscription. This request may be modified by the MuMCM 102 to request right away for a lower resolution multimedia, for example, in addition to including the remaining quota in the request or without including the remaining quota in the request. At steps 919-921, the response is received and at step 925, the multimedia content is downloaded from the content provider 105b towards the MuMCM 102 through the device 101c (not illustrated). The MuMCM 102 stores the multimedia content in its cache 103 for further use at step 922 and streams the content to device 101a at steps 923 and 926.

The MuMCM, in order to make a decision as to which subscription to use for downloading a multimedia content, can use parameters and settings such as, for example: quota remaining on each subscription, user defined maximum download available to other users (fixed or according to a formula), determination of cost of exceeding a quota vs cost of exceeding another quota, determination of cost of exceeding a quota compared to cost of using data of a next step of a progressive plan, restrictions of use to certain categories of users (e.g. family, friends, others), time of day or of month when a user wants to share downloads (e.g. unlimited data usage between certain hours), etc. The MuMCM can also consider the size of the multimedia content, which is retrieved from the manifest file, to decide which version of the multimedia content should be downloaded.

The invention has been described with reference to particular embodiments. However, it will be readily apparent to those skilled in the art that it is possible to embody the invention in specific forms other than those of the embodiments described above. The described embodiments are merely illustrative and should not be considered restrictive in any way. The scope of the invention is given by the appended claims, rather than the preceding description, and all variations and equivalents that fall within the range of the claims are intended to be embraced therein.

**Claims**

1. A method for managing multimedia content download, executed in a Multimedia Content Manager in communication with at least one user device and at least one operator network through at least one subscription, comprising the steps of:

   sending a request for data usage for a selected subscription, to a corresponding operator network;
   receiving a response comprising the data usage for the selected subscription from the corresponding operator network;
   receiving a request for a multimedia content from a user device;
   sending a modified request for the multimedia content to a content provider, through the selected subscription, the modified request being modified according to a maximum content size calculated according to the received data usage for the selected subscription;
   receiving the multimedia content from the content provider, through the selected subscription;

   and
   transmitting the multimedia content to the user device.

2. The method of claim 1 wherein the modified request contains the maximum content size to allow the content provider to provide the multimedia content in a size which is less or equal to the maximum content size.

3. The method of claim 1 or 2 wherein the modified request is a request for an alternative multimedia content of a reduced size, less or equal to the maximum content size.

4. The method of any of the preceding claims further comprising the steps of:

   sending a second request for data usage, for a second subscription, to a second corresponding operator network;
   receiving a second response comprising the data usage for the second user subscription from the second corresponding operator network; and
   selecting one of the subscriptions for use for sending the request for multimedia content and for receiving the multimedia content.

5. The method of claim 4 wherein the second operator network is a wireless operator network; and/or wherein a subscription to a broadband operator network is preferred over a subscription to a wireless operator network.

6. The method of any of the preceding claims further comprising the steps of:

   sending a plurality of requests for data usage, for a plurality of additional subscriptions, to corresponding operator networks;
   receiving a plurality of responses comprising the data usages for the plurality of additional user subscriptions from the corresponding operator networks; and
   selecting at least one of the subscriptions for use for sending the request for multimedia content and for receiving the multimedia content.

7. The method of claim 6 wherein:

   the step of selecting comprises selecting at least two subscriptions;
   the step of sending a request for multimedia content comprises:

      splitting the request for multimedia content in at least two requests; and

sending the at least two requests for multimedia content to the content providers through a plurality of user subscription, to increase the download speed; and

the step of receiving the multimedia content comprises merging the multimedia content received in response to the at least two requests.

8. The method of claim 6 or 7 wherein the step of selecting comprises selecting the subscription having a smallest ratio data usage / monthly quota; or selecting the subscription having a smallest ratio multimedia content size / monthly quota still available.

9. The method of any of the preceding claims further comprising the step of storing the multimedia content in a cache of the Multimedia Content Manager.

10. The method of any of the preceding claims wherein the Multimedia Content Manager is a standalone device connected to home gateway in the user domain; or wherein the Multimedia Content Manager is a service running in a home gateway in the user domain, wherein, optionally, the service is pushed to the home gateway in the user domain from the operator network, following an alarm.

11. The method of any of the preceding claims wherein the Multimedia Content Manager is standalone portable device.

12. The method of any of the preceding claims wherein the Multimedia Content Manager is a service running in a user device.

13. A Multimedia Content Manager, for managing multimedia content download, in communication with at least one user device and at least one operator network through at least one subscription, comprising:

an I/O interface module for :

sending a request for a data usage, for a selected subscription, to a corresponding operator network;
receiving a response comprising the data usage for the selected subscription from the corresponding operator network;
receiving a request for a multimedia content from a user device;
sending a modified request for the multimedia content to a content provider, through the selected subscription, the modified request being modified according to a maximum content size calculated according to the received data usage for the selected subscription;
receiving the multimedia content, from the content provider, through the selected subscription; and
transmitting the multimedia content to the user device; and
a processing module for calculating the maximum content size and for modifying the request for multimedia content.

14. The Multimedia Content Manager of claim 13 further comprising a cache for storing the multimedia content.

15. The Multimedia Content Manager of claim 13 or 14 wherein the Multimedia Content Manager is one of:

a standalone device connected to a home gateway in the user domain,
a service running in a home gateway in the user domain,
a standalone portable device, and
a service running in a user device.

Content/Service Providers

3PP content providers *108*

Operator/Cable *107*

Public/Private network *106*

Operator/Cable network *105*

Subscriber DB *110*

Router/FW/GW *104*

MuMCM *102*

MuMCM-Storage *103*

STB

*101a* *101b* *101c* *101d*

FIG. 1

EP 2 768 204 A1

**Operator domain** 105

HSS/AAA

GW/SBG 201

CP-AS 202

**User domain** 210

ME 101a

GW/FW 104

STB 101b

MuMCM 102

**Content Provider domain** 230

GW/SBG 204

CP-AS 205

CP-DB

FIG. 2

User domain *210*

ME *101a*

STB *101b*

MuMCM *102a*

GW/FW *104*

MuMCM *102b*

Operator domain *105*

HSS/AAA

GW/SBG *201*

CP-AS *202*

Content Provider domain *230*

GW/SBG *204*

CP-AS *205*

CP-DB

FIG. 3a

EP 2 768 204 A1

**USER DOMAIN**

Operator Domain 3 — *105c*

Operator Domain 2 — *105b*

Operator Domain 1 — *105a*

*210*

*101a*

*101c*

MuMCM — *102*

GW/FW

*104*

*101e*

FIG. 3b

USER DOMAIN

*210*

Operator
Domain 1

*105a*

*101d*

*101a*

*102*

MuMCM

*101c*

Operator
Domain 2

*105b*

*101f*

EP 2 768 204 A1

FIG. 3c

*210*

*101c*

*101a*

MuMCM

*102*

*101e*

Operator
Domain 2

*105b*

Operator
Domain 1

*105a*

FIG. 3d

EP 2 768 204 A1

FIG. 4b

FIG. 4a

EP 2 768 204 A1

PORTABLE DEVICE — 101a

401 — PROCESSOR

103a — STORAGE

102 — MuMCM

402 — I/O INTERFACE

103b — STORAGE

FIG. 4c

```
                                                              501
┌─────────────────────────────────────────────────┐      ╱
│      SENDING A REQUEST FOR DATA USAGE FOR A SELECTED      │     ╱
│  SUBSCRIPTION, TO A CORRESPONDING OPERATOR NETWORK │
└─────────────────────────────────────────────────┘
                        │
                        ▼                                     502
┌─────────────────────────────────────────────────┐      ╱
│  RECEIVING A RESPONSE COMPRISING THE DATA USAGE FOR THE SELECTED │
│   SUBSCRIPTION FROM THE CORRESPONDING OPERATOR NETWORK │
└─────────────────────────────────────────────────┘
                        │
                        ▼                                     503
┌─────────────────────────────────────────────────┐      ╱
│  RECEIVING A REQUEST FOR A MULTIMEDIA CONTENT FROM A USER DEVICE │
└─────────────────────────────────────────────────┘
                        │
                        ▼
┌─────────────────────────────────────────────────┐
│  SENDING A MODIFIED REQUEST FOR THE MULTIMEDIA CONTENT TO A CONTENT │   504
│ PROVIDER, THROUGH THE SELECTED SUBSCRIPTION, THE MODIFIED REQUEST BEING │  ╱
│  MODIFIED ACCORDING TO A MAXIMUM CONTENT SIZE CALCULATED ACCORDING │
│    TO THE RECEIVED DATA USAGE FOR THE SELECTED SUBSCRIPTION │
└─────────────────────────────────────────────────┘
                        │
                        ▼                                     505
┌─────────────────────────────────────────────────┐      ╱
│  RECEIVING THE MULTIMEDIA CONTENT, FROM THE CONTENT PROVIDER, │
│        THROUGH THE SELECTED SUBSCRIPTION          │
└─────────────────────────────────────────────────┘
                        │
                        ▼                                     506
┌─────────────────────────────────────────────────┐      ╱
│  TRANSMITTING THE MULTIMEDIA CONTENT TO THE USER DEVICE │
└─────────────────────────────────────────────────┘
```

*Fig. 5*

601

SENDING A SECOND REQUEST FOR DATA USAGE, FOR A SECOND
SUBSCRIPTION, TO A SECOND CORRESPONDING OPERATOR NETWORK

602

RECEIVING A SECOND RESPONSE COMPRISING THE DATA USAGE FOR THE SECOND
USER SUBSCRIPTION FROM THE SECOND CORRESPONDING OPERATOR NETWORK

603

SELECTING ONE OF THE SUBSCRIPTIONS FOR USE FOR SENDING THE REQUEST
FOR MULTIMEDIA CONTENT AND FOR RECEIVING THE MULTIMEDIA CONTENT

604

SENDING A PLURALITY OF REQUESTS FOR DATA USAGE, FOR A PLURALITY OF
ADDITIONAL SUBSCRIPTIONS, TO CORRESPONDING OPERATORS NETWORK

605

RECEIVING A PLURALITY OF RESPONSES COMPRISING THE DATA USAGES FOR THE PLURALITY
OF ADDITIONAL USER SUBSCRIPTIONS FROM THE CORRESPONDING OPERATORS NETWORKS

606

SELECTING AT LEAST ONE OF THE SUBSCRIPTIONS FOR USE FOR SENDING THE REQUEST
FOR MULTIMEDIA CONTENT AND FOR RECEIVING THE MULTIMEDIA CONTENT

607

SELECTING AT LEAST TWO SUBSCRIPTIONS

608

SPLITTING THE REQUEST FOR MULTIMEDIA CONTENT IN A AT LEAST TWO REQUESTS
SENDING THE AT LEAST TWO REQUESTS FOR MULTIMEDIA CONTENT TO THE CONTENT PROVIDERS
THROUGH A PLURALITY OF USER SUBSCRIPTION, TO INCREASE THE DOWNLOAD SPEED
MERGING THE MULTIMEDIA CONTENT RECEIVED IN RESPONSE TO THE AT LEAST TWO REQUESTS

FIG. 6

Mobile Device 101a | GW/FW 104 | MuMCM 102 | MuMCM [Storage] 103 | Operator network 105 | Subscriber DB 110 | Content Provider AS 205 | Trans-coding AS 730

701 — Request for Media content (Mobile Device → GW/FW)

Request for Media content (GW/FW → MuMCM) 702

703 — The requested Media content not in MuMCM

Request for Download quota (MuMCM → GW/FW)

704 — Request for Download quota (GW/FW → Operator network)

705 — Request for Download quota (Operator network → Subscriber DB)

706 — Response

707 — Response (Subscriber DB → Operator network)

708 — Response (Operator network → GW/FW)

709 — Response (GW/FW → MuMCM)

710 — Request for the Media Content based upon the quota (MuMCM → GW/FW)

711 — Request for the Media Content based upon the quota (GW/FW → Operator network)

Request for the Media Content based upon the quota (Operator network → Content Provider AS) 712

Adapt the Media content according to the request quota (Content Provider AS → Trans-coding AS)

713 — Success

714 — Success (Trans-coding AS → Content Provider AS)

715 — Response (Content Provider AS → Operator network)

716 — Response (Operator network → GW/FW)

717 — Response (GW/FW → MuMCM)

718 — Media Content (MuMCM ↔ Content Provider AS)

719 — Ready for Streaming (MuMCM → GW/FW)

Ready for Streaming (GW/FW → Mobile Device)

720 — Ready for Streaming

721 — Media Content (Mobile Device ↔ GW/FW)

Store the Media content (GW/FW → MuMCM [Storage])

722 — Store the Media content

723 — Success

Fig. 7

FIG. 8a

EP 2 768 204 A1

Request for the Media Content based upon the quota

817    Request for the Media Content based upon the quota    818

Resquest for the Media Content

Resquest for the Media Content    819

Resquest for the Media Content    820

Response    821

Response    822

Response    823

Response    824

Media Content downloading via ME 2 and ISP 2    830

Ready for streaming    825

Ready for Streaming    826

Media Content    831

Store the Media content    827

Success    828

FIG. 8b

EP 2 768 204 A1

| 101a | 101c | 102 | 105a | 105b | 105c | 205 | 101d |
|------|------|-----|------|------|------|-----|------|
| ME 1 | ME 2 | MuMCM | ISP 1 | ISP 2 | ISP 3 | Content Provider AS | ME 3 |

Request for Media content

901

902

Request for the download quota from ISP 1 (ME 1)

903

Content not found in MuMCM. But 3 MEs attached to MuMCM are identified.

Request for the Download quota from ISP 1 (ME 1)

904

Response

Response

905

Response

906

Request for the download quota from ISP 2

907

Request for the download quota from ISP 2

Response

908

909

Response

Request for the download quota from ISP 3

910

911

Request for the download quota from ISP 3

Response

912

913

Fig. 9a

915

Response

ISP 2 is
selected

914

Request for the Media
Content based upon the quota

916

Request for the Media Content based upon the quota

917

Resquest for the Media Content based upon the quota

919

Response

918

Response

920

Response

921

Downloading Media Content

925

Store the
Media Content

Ready for streaming

923

922

Media Content

926

FIG. 9b

**Europäisches Patentamt**
**European Patent Office**
**Office européen des brevets**

# EUROPEAN SEARCH REPORT

Application Number

EP 14 00 0405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/017506 A1 (FADELL ANTHONY [US]) 21 January 2010 (2010-01-21) * paragraph [0008] * * paragraph [0017] - paragraph [0029] * * paragraph [0042] - paragraph [0067] * ----- | 1-15 | INV. H04L29/08 H04L29/06 |
| X | Jiasi Chen: "QAVA: Quota Aware Video Adaptation", , 10 December 2012 (2012-12-10), pages 121-132, XP055080839, Retrieved from the Internet: URL:http://delivery.acm.org/10.1145/242000 0/2413191/p121-chen.pdf?ip=145.64.134.245& id=2413191&acc=ACTIVE SERVICE&key=986B26D8D17D60C88D75A192E31121 43&CFID=364783925&CFTOKEN=29206909&__acm__ =1380035384_ea3b71d6a7bbf4f86b7dda5956ce83 f8 [retrieved on 2013-09-24] * page 121 - page 125 * * page 130 - page 131 * ----- | 1-3,9-15 | |
| X | US 2010/188975 A1 (RALEIGH GREGORY G [US]) 29 July 2010 (2010-07-29) * paragraph [0094] * * paragraph [0152] - paragraph [0155] * * paragraph [0204] - paragraphs [0213], [0230] * * paragraphs [0244], [0341] * * paragraph [0513] - paragraph [0517] * ----- | 1-15 | TECHNICAL FIELDS SEARCHED (IPC) H04L H04W H04M |

The present search report has been drawn up for all claims

| Place of search | Date of completion of the search | Examiner |
|---|---|---|
| Munich | 15 May 2014 | Jurca, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 00 0405

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| US 2010017506 A1 | 21-01-2010 | NONE | |
| US 2010188975 A1 | 29-07-2010 | AU 2010208483 A1 | 08-09-2011 |
| | | AU 2010208484 A1 | 08-09-2011 |
| | | AU 2010208485 A1 | 08-09-2011 |
| | | AU 2010208486 A1 | 08-09-2011 |
| | | AU 2010208488 A1 | 08-09-2011 |
| | | AU 2010208489 A1 | 08-09-2011 |
| | | AU 2010208543 A1 | 08-09-2011 |
| | | AU 2010208544 A1 | 08-09-2011 |
| | | AU 2010208545 A1 | 08-09-2011 |
| | | AU 2010208546 A1 | 08-09-2011 |
| | | AU 2010208547 A1 | 08-09-2011 |
| | | AU 2010208551 A1 | 08-09-2011 |
| | | AU 2010208552 A1 | 08-09-2011 |
| | | AU 2010208553 A1 | 08-09-2011 |
| | | AU 2010208554 A1 | 08-09-2011 |
| | | AU 2010208556 A1 | 08-09-2011 |
| | | AU 2010208557 A1 | 08-09-2011 |
| | | AU 2010208558 A1 | 08-09-2011 |
| | | AU 2010208565 A1 | 08-09-2011 |
| | | CA 2786746 A1 | 05-08-2010 |
| | | CA 2786749 A1 | 05-08-2010 |
| | | CA 2786752 A1 | 05-08-2010 |
| | | CA 2786815 A1 | 05-08-2010 |
| | | CA 2786825 A1 | 05-08-2010 |
| | | CA 2786828 A1 | 05-08-2010 |
| | | CA 2786830 A1 | 05-08-2010 |
| | | CA 2786832 A1 | 05-08-2010 |
| | | CA 2786864 A1 | 05-08-2010 |
| | | CA 2786865 A1 | 05-08-2010 |
| | | CA 2786868 A1 | 05-08-2010 |
| | | CA 2786870 A1 | 05-08-2010 |
| | | CA 2786873 A1 | 05-08-2010 |
| | | CA 2786875 A1 | 05-08-2010 |
| | | CA 2786876 A1 | 05-08-2010 |
| | | CA 2786878 A1 | 05-08-2010 |
| | | CA 2786881 A1 | 05-08-2010 |
| | | CA 2786884 A1 | 05-08-2010 |
| | | CA 2786887 A1 | 05-08-2010 |
| | | CN 102365554 A | 29-02-2012 |
| | | CN 102365620 A | 29-02-2012 |
| | | CN 102365623 A | 29-02-2012 |
| | | CN 102365630 A | 29-02-2012 |
| | | CN 102365631 A | 29-02-2012 |
| | | CN 102365632 A | 29-02-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 14 00 0405

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| | | CN   102365633 A | 29-02-2012 |
| | | CN   102365642 A | 29-02-2012 |
| | | CN   102365643 A | 29-02-2012 |
| | | CN   102365840 A | 29-02-2012 |
| | | CN   102365842 A | 29-02-2012 |
| | | CN   102365847 A | 29-02-2012 |
| | | CN   102365853 A | 29-02-2012 |
| | | CN   102365855 A | 29-02-2012 |
| | | CN   102365858 A | 29-02-2012 |
| | | CN   102365876 A | 29-02-2012 |
| | | CN   102365877 A | 29-02-2012 |
| | | CN   102365890 A | 29-02-2012 |
| | | CN   102483730 A | 30-05-2012 |
| | | EP   2391940 A1 | 07-12-2011 |
| | | EP   2391942 A1 | 07-12-2011 |
| | | EP   2391947 A1 | 07-12-2011 |
| | | EP   2391948 A1 | 07-12-2011 |
| | | EP   2391949 A1 | 07-12-2011 |
| | | EP   2391950 A1 | 07-12-2011 |
| | | EP   2391951 A1 | 07-12-2011 |
| | | EP   2391965 A1 | 07-12-2011 |
| | | EP   2391966 A1 | 07-12-2011 |
| | | EP   2391977 A1 | 07-12-2011 |
| | | EP   2392102 A1 | 07-12-2011 |
| | | EP   2392109 A1 | 07-12-2011 |
| | | EP   2392124 A1 | 07-12-2011 |
| | | EP   2392126 A1 | 07-12-2011 |
| | | EP   2392129 A1 | 07-12-2011 |
| | | EP   2392153 A1 | 07-12-2011 |
| | | EP   2392154 A1 | 07-12-2011 |
| | | EP   2392170 A1 | 07-12-2011 |
| | | EP   2394181 A1 | 14-12-2011 |
| | | KR 20110108416 A | 05-10-2011 |
| | | KR 20110110360 A | 06-10-2011 |
| | | KR 20110110829 A | 07-10-2011 |
| | | KR 20110110830 A | 07-10-2011 |
| | | KR 20110110831 A | 07-10-2011 |
| | | KR 20110110832 A | 07-10-2011 |
| | | KR 20110110833 A | 07-10-2011 |
| | | KR 20110110834 A | 07-10-2011 |
| | | KR 20110110835 A | 07-10-2011 |
| | | KR 20110113192 A | 14-10-2011 |
| | | KR 20110113640 A | 17-10-2011 |
| | | KR 20110116189 A | 25-10-2011 |
| | | KR 20110116190 A | 25-10-2011 |
| | | KR 20110117200 A | 26-10-2011 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 14 00 0405

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| | | KR 20110124258 A | 16-11-2011 |
| | | KR 20110124259 A | 16-11-2011 |
| | | KR 20110124260 A | 16-11-2011 |
| | | KR 20110124261 A | 16-11-2011 |
| | | KR 20110126638 A | 23-11-2011 |
| | | NZ 594715 A | 20-12-2013 |
| | | NZ 594724 A | 28-02-2014 |
| | | NZ 594725 A | 27-09-2013 |
| | | NZ 594731 A | 28-03-2014 |
| | | NZ 594732 A | 30-08-2013 |
| | | NZ 594734 A | 28-03-2014 |
| | | NZ 594753 A | 27-09-2013 |
| | | NZ 594756 A | 31-01-2014 |
| | | NZ 594758 A | 28-02-2014 |
| | | NZ 594761 A | 28-03-2014 |
| | | NZ 594762 A | 31-01-2014 |
| | | NZ 594764 A | 31-01-2014 |
| | | NZ 594766 A | 28-02-2014 |
| | | NZ 594787 A | 27-09-2013 |
| | | NZ 594788 A | 30-08-2013 |
| | | NZ 594789 A | 27-09-2013 |
| | | NZ 594791 A | 28-02-2014 |
| | | NZ 594793 A | 27-09-2013 |
| | | NZ 594795 A | 27-09-2013 |
| | | US 8326958 B1 | 04-12-2012 |
| | | US 2010188975 A1 | 29-07-2010 |
| | | US 2010188990 A1 | 29-07-2010 |
| | | US 2010188991 A1 | 29-07-2010 |
| | | US 2010188992 A1 | 29-07-2010 |
| | | US 2010188993 A1 | 29-07-2010 |
| | | US 2010188994 A1 | 29-07-2010 |
| | | US 2010188995 A1 | 29-07-2010 |
| | | US 2010190470 A1 | 29-07-2010 |
| | | US 2010191575 A1 | 29-07-2010 |
| | | US 2010191576 A1 | 29-07-2010 |
| | | US 2010191604 A1 | 29-07-2010 |
| | | US 2010191612 A1 | 29-07-2010 |
| | | US 2010191613 A1 | 29-07-2010 |
| | | US 2010191846 A1 | 29-07-2010 |
| | | US 2010191847 A1 | 29-07-2010 |
| | | US 2010192120 A1 | 29-07-2010 |
| | | US 2010192170 A1 | 29-07-2010 |
| | | US 2010192207 A1 | 29-07-2010 |
| | | US 2010192212 A1 | 29-07-2010 |
| | | US 2012088470 A1 | 12-04-2012 |
| | | US 2012134291 A1 | 31-05-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 14 00 0405

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | | Publication date |
|---|---|---|---|---|
| | | US | 2012192249 A1 | 26-07-2012 |
| | | US | 2012195206 A1 | 02-08-2012 |
| | | US | 2012195222 A1 | 02-08-2012 |
| | | US | 2012195223 A1 | 02-08-2012 |
| | | US | 2012196565 A1 | 02-08-2012 |
| | | US | 2012197792 A1 | 02-08-2012 |
| | | US | 2012201133 A1 | 09-08-2012 |
| | | US | 2012203677 A1 | 09-08-2012 |
| | | US | 2012208496 A1 | 16-08-2012 |
| | | US | 2012209750 A1 | 16-08-2012 |
| | | US | 2012210391 A1 | 16-08-2012 |
| | | US | 2012214441 A1 | 23-08-2012 |
| | | US | 2012294195 A1 | 22-11-2012 |
| | | US | 2013003613 A1 | 03-01-2013 |
| | | US | 2013005299 A1 | 03-01-2013 |
| | | US | 2013005322 A1 | 03-01-2013 |
| | | US | 2013006729 A1 | 03-01-2013 |
| | | US | 2013006780 A1 | 03-01-2013 |
| | | US | 2013040703 A1 | 14-02-2013 |
| | | US | 2013045710 A1 | 21-02-2013 |
| | | US | 2013072149 A1 | 21-03-2013 |
| | | US | 2013080607 A1 | 28-03-2013 |
| | | US | 2013096998 A1 | 18-04-2013 |
| | | US | 2013125219 A1 | 16-05-2013 |
| | | US | 2013132578 A1 | 23-05-2013 |
| | | US | 2013133028 A1 | 23-05-2013 |
| | | US | 2013215795 A1 | 22-08-2013 |
| | | US | 2013227659 A1 | 29-08-2013 |
| | | US | 2013229951 A1 | 05-09-2013 |
| | | US | 2013231084 A1 | 05-09-2013 |
| | | US | 2013235766 A1 | 12-09-2013 |
| | | US | 2013239194 A1 | 12-09-2013 |
| | | US | 2013250768 A1 | 26-09-2013 |
| | | US | 2014113583 A1 | 24-04-2014 |
| | | WO | 2010088072 A1 | 05-08-2010 |
| | | WO | 2010088073 A1 | 05-08-2010 |
| | | WO | 2010088074 A1 | 05-08-2010 |
| | | WO | 2010088075 A1 | 05-08-2010 |
| | | WO | 2010088076 A1 | 05-08-2010 |
| | | WO | 2010088080 A1 | 05-08-2010 |
| | | WO | 2010088081 A1 | 05-08-2010 |
| | | WO | 2010088082 A1 | 05-08-2010 |
| | | WO | 2010088083 A1 | 05-08-2010 |
| | | WO | 2010088085 A1 | 05-08-2010 |
| | | WO | 2010088086 A1 | 05-08-2010 |
| | | WO | 2010088087 A1 | 05-08-2010 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 14 00 0405

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| | | WO 2010088094 A1 | 05-08-2010 |
| | | WO 2010088095 A1 | 05-08-2010 |
| | | WO 2010088096 A1 | 05-08-2010 |
| | | WO 2010088097 A1 | 05-08-2010 |
| | | WO 2010088098 A1 | 05-08-2010 |
| | | WO 2010088100 A1 | 05-08-2010 |
| | | WO 2010088101 A1 | 05-08-2010 |

EPO FORM P0459

For more details about this annex : see Official Journal of the European Patent Office, No. 12/82